(19) **Europäisches Patentamt / European Patent Office / Office européen des brevets**

(11) **EP 3 747 686 B1**

(12) **EUROPEAN PATENT SPECIFICATION**

(45) Date of publication and mention
of the grant of the patent:
**14.05.2025 Bulletin 2025/20**

(21) Application number: **19746865.5**

(22) Date of filing: **15.01.2019**

(51) International Patent Classification (IPC):
**B61L 15/00** (2006.01)   **B61L 27/04** (2006.01)
**B61L 27/16** (2022.01)   **B61L 27/20** (2022.01)
**B60L 3/00** (2019.01)   **B60L 15/20** (2006.01)
**B60L 15/04** (2006.01)   **B60L 15/40** (2006.01)

(52) Cooperative Patent Classification (CPC):
**B60L 3/0015; B60L 15/20; B60L 15/40;**
**B61L 15/0058; B61L 15/0062; B61L 27/04;**
**B61L 27/16; B61L 27/20;** B60L 2200/26;
B60L 2240/12; B60L 2240/62; B60L 2240/70;
B60L 2240/80; B60L 2260/32; B60L 2260/50;
(Cont.)

(86) International application number:
**PCT/JP2019/000826**

(87) International publication number:
**WO 2019/150925 (08.08.2019 Gazette 2019/32)**

(54) **TRAVEL PATTERN CREATION DEVICE, TRAVEL PATTERN CREATION METHOD AND AUTOMATIC TRAIN OPERATION DEVICE**

VORRICHTUNG, ZUR ERZEUGUNG VON FAHRMUSTERN, VERFAHREN ZUR ERZEUGUNG VON FAHRMUSTERN UND VORRICHTUNG FÜR AUTOMATISCHEN ZUGBETRIEB

DISPOSITIF DE CRÉATION DE SCHÉMA DE PARCOURS, PROCÉDÉ DE CRÉATION DE SCHÉMA DE PARCOURS ET DISPOSITIF DE COMMANDE DE TRAIN AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2018  JP 2018013167**

(43) Date of publication of application:
**09.12.2020 Bulletin 2020/50**

(73) Proprietor: **Hitachi, Ltd.**
**Tokyo 100-8280 (JP)**

(72) Inventors:
• **ODA Atsushi**
**Tokyo 100-8280 (JP)**
• **NISHINO Takayoshi**
**Tokyo 100-8280 (JP)**
• **MAKI Kentaroh**
**Tokyo 100-8280 (JP)**

(74) Representative: **Mewburn Ellis LLP**
**Aurora Building**
**Counterslip**
**Bristol BS1 6BX (GB)**

(56) References cited:
EP-A1- 2 923 913      EP-B1- 2 923 913
JP-A- 2004 155 314    JP-A- 2016 000 573
JP-A- 2016 005 294    JP-A- 2016 005 294
JP-A- 2018 007 497    JP-A- H07 285 439
JP-A- H10 167 070

**(Cont. next page)**

(52) Cooperative Patent Classification (CPC): (Cont.)
    Y02T 10/72; Y02T 90/16

# EP 3 747 686 B1

## Description

### Technical Field

The present invention relates to a travel pattern creation device for creating a travel pattern of a vehicle traveling on a track, a corresponding method and an automatic train operation device.

### Background Art

In a track transportation system that travels on a track, if there is an obstacle on the track, it cannot be avoided by steering, unlike a car, so detecting obstacles is important to improve train safety and operability. In manned track transportation systems, a driver detects obstacles on the track. In unmanned track transportation systems, tracks are installed on overhead tracks or underground to block intersections with other traffic and prevent physical obstacles from entering the tracks. In addition, platforms are equipped with platform doors, and safety measures are taken to prevent people from falling or entering the track.

In recent years, there has been a movement to realize unmanned driving in a track transportation system that intersects other traffic at a railroad crossing or the like. Since there is an intersection with other traffic, a mechanism to reduce the risk of collision between the track transportation system and obstacles is important.

PTL 1 discloses a technique for reducing the risk of collision with an obstacle in the track transportation system. Specifically, based on past accident data for each route, the size and mass of obstacles at the accident location, the probability of collision taking into account the season and time zone, and the magnitude of damage in the event of a collision are expressed in a statistics model. The magnitude of the collision risk in the section where the train is running is estimated, and if the estimated collision risk is large, speed control is performed.

### Citation List

#### Patent Literature

PTL 1: JP 2016-5294 A

### Summary of Invention

#### Technical Problem

In PTL 1, the magnitude of the collision risk in the section where the train is traveling is estimated, and when the estimated collision risk is larger than a predetermined reference value, the travel pattern of the traveling section until the estimated collision risk becomes equal to or less than the reference value is repeatedly corrected. However, there is a need to reduce the speed in order to reduce the collision risk, and the inter-station travel time increases with the correction of the travel pattern. In PTL 1, since the speed is reduced until the collision risk becomes equal to or less than the reference value, a problem occurs that the time between stations defined on a schedule cannot be satisfied.

The invention has been made in consideration of the above points, and an object thereof is to provide a travel pattern between stations in which an influence on an inter-station travel time is suppressed and a risk is also suppressed.

#### Solution to Problem

In order to solve the above-mentioned problem, a travel pattern creation device, an automatic train operation device and a travel pattern creation method as set forth in the claims are provided.

#### Advantageous Effects of Invention

The present invention is defined by the features of the independent claims. The dependent claims define preferred embodiments of the invention. It is possible to provide a travel pattern between stations in which an influence on an inter-station travel time is suppressed and a risk is also suppressed. Objects, configurations, and effects besides the above description will be apparent through the explanation on the following embodiments.

### Brief Description of Drawings

[FIG. 1] FIG. 1 is a diagram illustrating a configuration of a train equipped with an automatic train operation device (ATO device).

[FIG. 2] FIG. 2 is a diagram illustrating a configuration of a travel pattern creation device according to an embodiment of the invention.

[FIG. 3] FIG. 3 is a diagram illustrating a format example and a storage example of a database stored in a risk storage unit in an embodiment of the invention.

[FIG. 4] FIG. 4 is a flowchart illustrating a process of a travel pattern creation unit according to an embodiment of the invention.

[FIG. 5] FIG. 5 is a conceptual diagram illustrating an image of a travel pattern creation process in an embodiment of the invention.

[FIG. 6] FIG. 6 is a diagram illustrating a configuration of a travel pattern creation device according to an embodiment of the invention.

[FIG. 7] FIG. 7 is a flowchart illustrating a process of a travel pattern creation unit in an embodiment of the invention.

Description of Embodiments

Hereinafter, embodiments of the invention will be described with reference to the accompanying drawings.

First Embodiment

In a first embodiment, a travel pattern creation device for a train equipped with an automatic train operation device (ATO device) will be described.

(1) Outline of Automatic Train Operation Device (ATO Device) 101

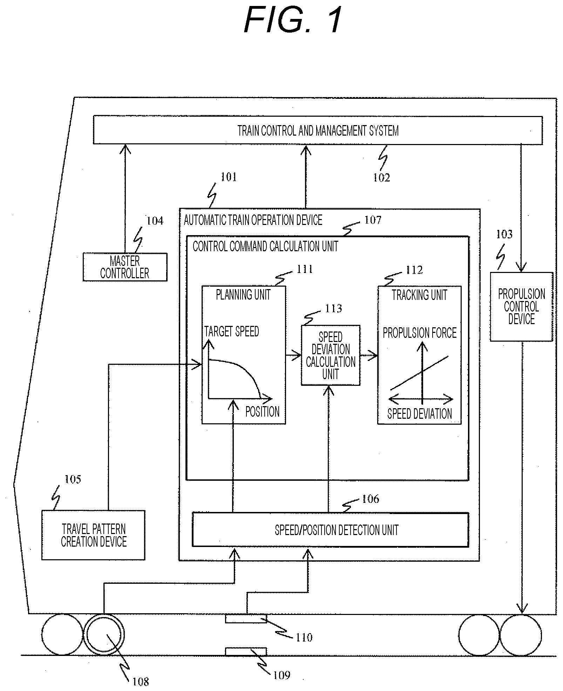

FIG. 1 is a block diagram of a configuration illustrating a relation among a train control and management system 102 mounted on a train, an automatic train operation device (hereinafter, referred to as an ATO device) 101, a propulsion control device 103, a master controller (hereinafter, abbreviated as a master controller) 104, and a travel pattern creation device 105. The train is sometimes referred to as a vehicle that is in the train.

The ATO device 101 has two main functions as described below. One is a speed/position detection function for detecting a speed signal and a position, and the other is a control command calculation function for calculating a propulsion command.

Therefore, the ATO device 101 includes a speed/position detection unit 106 that performs a speed/position detection function, and a control command calculation unit 107 that executes a control command calculation function.

That is, the ATO device 101 detects the speed signal from a speed generator 108 installed on the wheel axle of the train by the speed/position detection unit 106, and also detects the position from an on-vehicle element 110 communicating with a ground element 109. The on-vehicle element 110 is installed on the bottom surface of the train so as to face the ground element 109. In this embodiment, the one using the integrated speed/position detection unit 106 is used. However, the same applies even if the speed detection unit for detecting the speed and the position detection unit for detecting the position are separately provided.

In addition, the ATO device 101 calculates a propulsion command based on the acquired speed signal and position signal by the control command calculation unit 107, and outputs the calculated propulsion command to the train control and management system 102 or the propulsion control device 103.

The control command calculation unit 107 further includes a planning unit 111 that performs a planning function, a tracking unit 112 that performs a tracking function, and a speed deviation calculation unit 113.

The planning unit 111 receives the position information from the speed/position detection unit 106 and plans the target speed of the train.

The speed deviation calculation unit 113 receives the target speed from the planning unit 111 and the speed from the speed/position detection unit 106, calculates a difference between these speeds, that is, a speed deviation, and outputs the difference to the tracking unit 112.

The tracking unit 112 receives the speed deviation calculated by the speed deviation calculation unit 113 and outputs a propulsion force.

The planning function in the planning unit 111 is a function of calculating a target speed by comparing the current position with a travel pattern which is time-series information of the position/speed defining the way of traveling between stations of the track transportation system created by the travel pattern creation device 105.

In addition, the tracking function of the tracking unit 112 is a function of inputting a speed deviation between the target speed calculated by the speed deviation calculation unit 113 and the current speed, and calculating a propulsion force to be output.

The ATO device 101 includes the propulsion force calculated by the tracking unit 112 in the propulsion command and outputs the command to the train control and management system 102 or the propulsion control device 103.

The propulsion control device 103 controls traveling of the train based on the input propulsion command.

The propulsion commands from the ATO device 101 and the master controller 104 include a notch command and a torque command. The train control and management system 102 is a device that manages information transmission of the vehicle, and outputs the input propulsion command to the propulsion control device 103 when receiving the propulsion command from the ATO device 101 or the master controller 104. The master controller 104 is a switch device for remotely controlling the output and speed of a railway vehicle, and is generally installed on a cab of the vehicle.

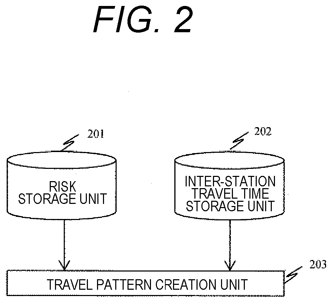

FIG. 2 is a diagram illustrating functional blocks of a travel pattern creation device 105 that creates a travel pattern. The travel pattern creating unit is a risk storage unit 201 in which a risk of the route on which the track transportation system travels is stored, an inter-station travel time storage unit 202 in which the travel time for each inter-station defined on a schedule is stored, and a travel pattern creation unit 203 which creates a travel pattern such that minimizes the risk of the travel pattern while satisfying the inter-running time.

In FIG. 1, the travel pattern creation device is configured separately from the ATO device. However, the functional blocks of the travel pattern creation device may be incorporated in the ATO device. In addition, in FIG. 1, the configuration in which the travel pattern creation device is installed on the vehicle of the track transportation system has been described, but the travel pattern creation device may be installed on the ground. When installed on the ground, the same effect can be obtained by transmitting the created travel pattern to vehicles of the track transportation system by communication such as wireless communication.

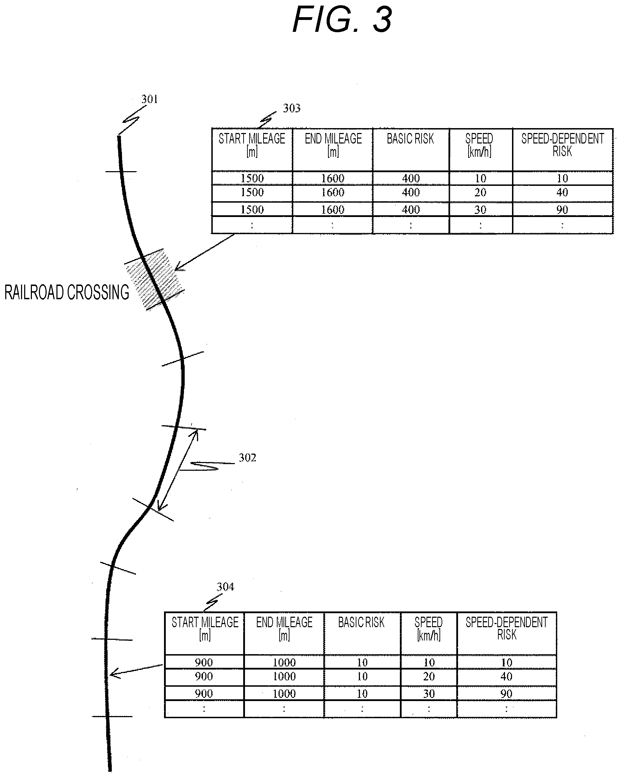

The data format held by the risk storage unit will be described. FIG. 3 illustrates a data format.

A route 301 on which the track transportation system travels is divided into arbitrary sections 302, and the risk evaluation result for each arbitrary section 302 is stored as a table. The way of dividing an arbitrary section is, for example, every 100 m. Even if a railroad crossing or a bridge is less than 100 m, it is better to use another section only for this section. In addition, a section distance may be set longer in a section where an assumed risk is low such as a straight line or an overhead, and a section distance may be set short in a section where an assumed risk is high such as a curve.

Examples of the risk evaluation result table for each arbitrary section 302 are indicated with 303 and 304. Reference numeral 303 denotes a risk evaluation result table for a section where a railroad crossing exists, and reference numeral 304 denotes a risk evaluation result table for a straight section. In the risk evaluation result tables 303 and 304, a start mileage and an end mileage indicating which section of the route the risk evaluation result table is for are described. In addition, a basic risk defined according to the characteristics of the section is described. For example, a high value is set for the basic risk in a section having a high risk of collision with other traffic such as a railroad crossing, and a low basic risk is set for a straight line with good visibility. In addition to railroad crossings, the characteristics of sections include platforms, tunnels, bridges, overhead, underground, curves, slopes, turnouts, steep slopes near tracks, high-rise buildings near tracks, bridges on tracks, etc.

Since the collision risk also depends on the speed, the risk evaluation result table also describes the speed and the risk at that speed. Generally, as the speed increases, the distance required for braking increases, and the risk of collision increases. Therefore, as the speed increases, a speed-dependent risk is set to a higher value.

There is a method in which the basic risk and the speed-dependent risk in the risk evaluation result table are determined by estimating the collision probability for each section based on the past case database. In addition, the speed-dependent risk may be determined based on the degree of damage to the track transportation system at the time of collision using a physical simulation, and may be determined based on the degree of damage. In addition, the basic risk includes those other than collision risks. For example, the risk of getting on the earth and sand that has flowed into the track, the risk of being blown by the bridge, and the like may be considered. An appropriate risk can be grasped according to the actual situation by defining the risk value from the basic risk, which is the first risk value defined according to the characteristics of the section, and the speed-dependent risk, which is a second risk value defined according to the speed.

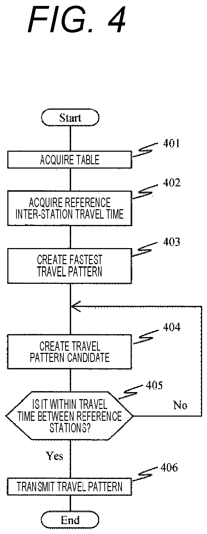

Next, a travel pattern generation method will be described. FIG. 4 is a flowchart illustrating a processing procedure executed by a travel pattern generation unit 203.

In Steps 401 to 406, a travel pattern is generated. The operation based on the flowchart of FIG. 4 is as follows.

Step 401:

A risk evaluation result table between stations for which a travel pattern is to be created is obtained from the risk storage unit 201. The process proceeds to Step 402.

Step 402:

The inter-station travel time for which the travel pattern is to be created is acquired from the inter-station travel time storage unit 202, and is set as a reference inter-station travel time. The process proceeds to Step 403.

Step 403:

A travel pattern that runs at the fastest speed between stations for which a travel pattern is to be created is generated as the fastest travel pattern. The process proceeds to Step 404.

Step 404:

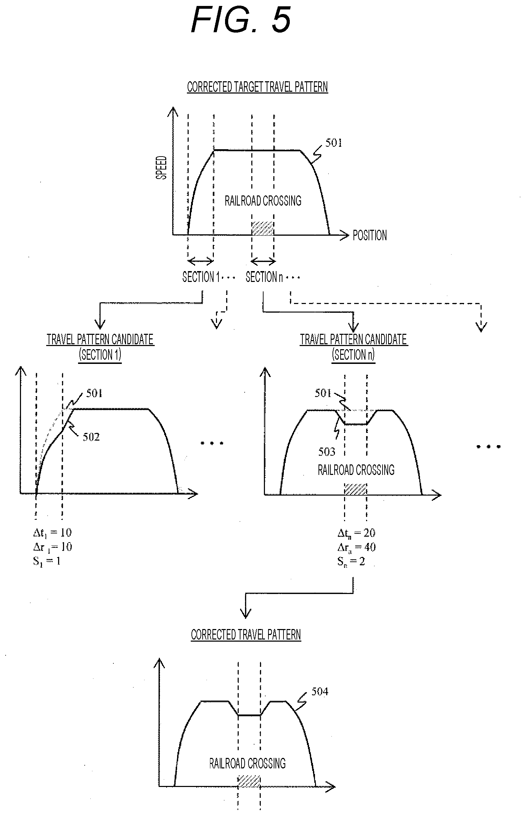

The processing details of Step 404 will be described with reference to FIG. 5. Travel pattern candidates 502 and 503 in which the speed is reduced by a predetermined value for each section with respect to the travel pattern 501 to be corrected are created. In the first trial, the travel pattern to be corrected is the fastest travel pattern. Next, the inter-station travel time and the risk for each of the travel pattern candidates 502 and 503 are calculated. The inter-station travel time can be calculated at the same time as creating travel pattern candidates. The risk refers to the risk evaluation result table for each section with respect to the travel pattern candidate, and reads out the speed-dependent risk according to the basic risk of the target section and the speed of the travel pattern candidate in the target section. The speed at which the speed-dependent risk is read may be an average speed of the travel pattern candidates in the target section or a maximum speed. The risks read for each section are summed up to be the risk between stations. The difference between the travel time of the travel pattern 501 to be corrected and the inter-station travel time of the travel pattern candidates 502 and 503 is defined as an increased travel time $\Delta t$. In addition, the risk between stations of the travel pattern 501 to be corrected and the risk between stations of the travel pattern candidates 502 and 503 are calculated, and the difference between the risks is defined as a reduced risk $\Delta r$. When the risk is reduced, the reduced risk $\Delta r$ takes a positive value. An evaluation function S is defined as follows.

[Math. 1]

$$S_n = \frac{\Delta r_n}{\Delta t_n}$$

The evaluation function S is calculated for each section. In FIG. 5, $\Delta t_1$ of the travel pattern candidate 502 in which the section 1 is changed is 10, $\Delta r_1 = 10$, $S_1 = 1$, and $\Delta t_1$ of the travel pattern candidate 503 in which the section n is changed is 20, $\Delta r_1 = 40$, and $S_1 = 2$ is illustrated as an example. Such a calculation is performed in all sections to evaluate the evaluation function. The travel pattern candidate in the section where the evaluation function S is maximized is adopted as the corrected travel pattern 504. In FIG. 5, since the evaluation function $S_n$ of the section n is maximized, the travel pattern candidate 503 of the section n is set as the corrected travel pattern 504. The process proceeds to Step 405.

Step 405:

The inter-station travel time of the corrected travel pattern and the travel time between reference stations are compared. If the inter-station travel time in the corrected travel pattern matches the reference travel time, the process proceeds to Step 406. When the inter-station travel time in the corrected travel pattern is longer or shorter than the reference travel time, the process proceeds to Step 404. Here, the condition for proceeding to Step 406 may not be a perfect match. For example, a match may be determined if the travel time between the reference stations is within $\pm$ 15 seconds. In this embodiment, it is determined whether the travel times match, but it is also possible to determine whether the distance is within the reference inter-station travel time, such as within $\pm$ 10 minutes.

Step 406:

The travel pattern created in Step 404 is transmitted to the ATO device as a target travel pattern.
In Step 404, a travel pattern that minimizes the risk while satisfying the inter-station travel time using a hill-climbing method has been generated. However, the process in Step 404 is concluded to an optimization problem in which the inter-station travel time is a constraint and the risk is set to the evaluation function. Therefore, the process of Step 404 can be realized even using another optimization method, and for example, a dynamic programming method may be used. In the invention, any method may be employed as long as it is possible to generate a travel pattern with a minimum risk while satisfying the constraint conditions for traveling between stations.

As described above, according to the first embodiment, when creating a travel pattern for creating a travel pattern of the track transportation system traveling on a track, a travel pattern is created based on a risk value for each section into which a plurality of stations are divided, and it is determined whether the created travel pattern fits within a desired travel time. Therefore, it is possible to create a travel pattern so that the risk of collision between the track transportation system and obstacles is reduced while satisfying the inter-station travel time.

Although the value of the risk evaluation table is described as being static in the first embodiment, it may be changed dynamically. For example, in a case where it is detected that the track transportation system is temporarily stopped and the platform is congested as a result of the analysis of a passenger flow, the basic risk near the station platform in the risk evaluation table may be rewritten to a higher value. In addition, the case of a collision accident may be reflected in real time.

Although the time element is not considered in the value of the risk evaluation table in the first embodiment, a risk evaluation table for each time may be set. For example, the basic risk of a railroad crossing is increased during the commuting time, and the basic risk of a straight line is set high at night. With this configuration, the risk can be evaluated in more detail. In addition, factors that may change the risk, such as day of the week and weather, may be considered. The risk evaluation table may be held for each condition such as time zone and weather, and the risk evaluation table of the condition closest to the current condition may be read.

Second Embodiment

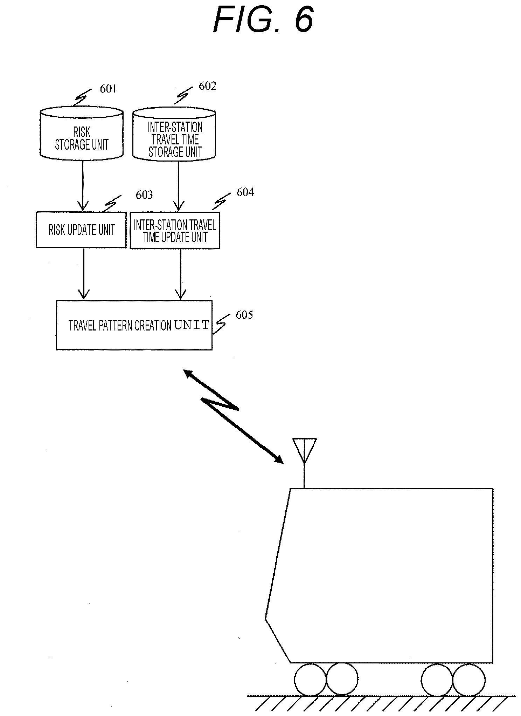

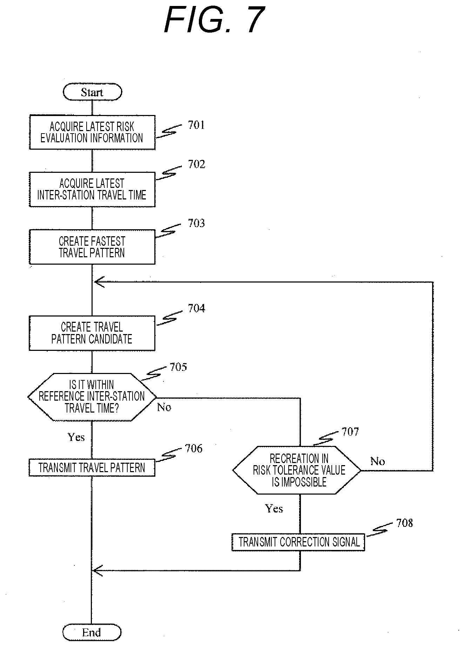

In the second embodiment, an example in which a travel pattern is dynamically created by a travel pattern creation device installed on the ground such as a command room will be described with reference to FIGS. 6 and 7. The description of the same parts as in the first embodiment will be omitted.

FIG. 6 is a diagram illustrating a configuration of a travel pattern creation device according to the second embodiment.

The travel pattern creation unit 605 provided on the ground dynamically creates a travel pattern from the latest risk evaluation information from a risk update unit 603 and the latest inter-station travel time information from an inter-station travel time update unit 604. The train is driven according to the travel pattern received by wireless communication.

The risk evaluation information may be directly input to the risk update unit 603, or may be additionally stored in a risk storage unit 601. The inter-station travel time information may be directly input to the inter-station travel time update unit 604, or may be additionally stored in an inter-station travel time storage unit 602. Both the risk evaluation information and the inter-station travel time information may be manually input by a person, or may be automatically created by the system based on a predetermined input.

Next, a travel pattern generation method will be described. FIG. 7 is a flowchart illustrating the process of the travel pattern creation unit 605. The travel pattern creation unit (605) executes the process illustrated in FIG. 7 each time the information of the risk update unit 603 and the inter-station travel time update unit 604 is updated.

In Steps 701 to 706, the travel pattern is generated. The operation based on the flowchart in FIG. 7 is as follows.

Step 701:

The latest risk evaluation information between stations whose travel patterns are to be created is acquired from the risk update unit 603. The process proceeds to Step 702.

Step 702:

The latest travel time between stations for which travel patterns are to be created is acquired from the inter-station travel time update unit 604, and is used as the reference inter-station travel time. The process proceeds to Step 703.

Step 703:

A travel pattern that runs at the fastest speed between stations for which a travel pattern is to be created is generated as the fastest travel pattern. The process proceeds to Step 704.

Steps 704 and thereafter are the same as in the first embodiment.

As a scene where the dynamic creation according to this embodiment is effective, there is a scene where it is desired to reduce the inter-station travel time in order to recover the delay. In this case, by inputting a short travel time according to the degree to be recovered to the inter-station travel time update unit 604, it is possible to operate the vehicle with a required time shorter than usual, and to achieve an early recovery to a normal schedule. A recovery travel time may be set in advance, and may be set so as to be automatically input to the inter-station travel time update unit 604 when a delay occurs.

As another example, the risk may be changed according to the weather. The risk of an on-bridge section may be set in advance according to the wind speed, and the risk update unit 603 may input the latest risk information from the wind condition information input in real time to the travel pattern creation unit 605. With this configuration, it becomes possible to perform operation control that suppresses a train delay while suppressing an increase in overall risk even in stormy weather.

Such various risks may be prepared as a table for each scenario, and the risk update unit 603 may select an appropriate table based on the information on the appearance of various risks. The scenarios include, for example, natural environmental conditions such as wind and rain, and passenger flow. In the case of rain, the risk of sections where the risk changes according to the amount of rain, such as bridges, overhead, curved sections, slopes, etc., is stored as a table for each rainfall, and the risk update unit 603 refers to the table according to the rainfall information from a rain gauge, and transmits the latest risk evaluation information to the travel pattern creation unit 605. With this configuration, even when a factor causing a change in risk occurs, it is possible to automatically realize operation with reduced risk while suppressing train delay.

In addition, it may be determined in Step 707 that a travel pattern that fits within the reference travel time cannot be created within a preset risk tolerance value, and a travel time correction signal may be issued in Step 708. The determination that the creation is not possible may be made based on whether the determination in Step 705 has been performed a predetermined number of times (for example, 10 times). With such a second determination unit, when the set reference travel time is inappropriate, it can be detected early.

If the correction signal is displayed on a display, a commander can be prompted to input a new travel time to the inter-station travel time update unit 604. In addition, the signal may be transmitted to the inter-station travel time update unit 604, and the inter-station travel time update unit 604 itself may set a new travel time and transmit the signal to the travel pattern creation unit 605.

In the travel pattern creation device of each embodiment described above, it is possible to provide a travel pattern between stations that has suppressed the risk while suppressing the influence on the inter-station travel time by creating the risk on each section where the stations are divided into a plurality of sections and the travel pattern created from the information on the inter-station travel time. Specifically, there is provided a determination unit that determines whether the travel pattern created from the information on the risk value is within the reference travel time. By adjusting the risk for each section based on the travel time, it is possible to create a travel pattern between stations so that a damage caused by collision between the track transportation system and obstacles while satisfying the inter-station travel time specified by the schedule.

In the first embodiment, the risk value is calculated as an evaluation function, so that the travel pattern is created to minimize the risk impact calculated based on the risk value. If the created travel pattern does not fit within the reference travel time, a travel pattern is created again such that the risk impact is minimized within conditions that fit within the reference travel time, and the fitted travel pattern is transmitted as the target travel pattern.

In particular, the travel pattern creation unit 605 of the second embodiment receives the updated risk value transmitted from the risk update unit 603 and the updated inter-station travel time transmitted from the inter-station travel time update unit 604, and dynamically creates the travel pattern. By dynamically referring to the risk update information, it is possible to realize low-risk traveling according to the abnormal situation at that time. By dynamically referring to the travel time update information, it is possible to contribute to the earlier recovery of the delay.

In addition, with the automatic train operation device using the speed pattern created in this way, that is, an automatic train operation device which includes the travel pattern created from information on the risk value and the travel time between stations divided into a plurality of sections, the planning unit 111 for planning a target speed from the speed and the position, the speed deviation calculation unit 113 for calculating a speed deviation from the speed and the target speed, and the tracking unit 112 which receives the speed deviation and outputs a propulsion force, it is possible to provide an automatic operation in which the influence on the inter-station travel time is suppressed and the risk is also suppressed.

Although the examples of an unmanned track transportation system have been described in each embodiment, the invention is also applicable to a manned track transportation system. In the case of manned driving, a driver is assisted so as to follow the travel pattern created by the travel pattern creation unit. As a method of assisting, the travel pattern may be displayed on a display installed in the driver's cab, or the travel pattern may be converted into a driving operation and then displayed on the display of the driver's cab.

In each embodiment, the travel pattern with the minimum risk has been generated by using the optimization method. However, when there is a section in which the risk is particularly to be reduced, a travel pattern that minimizes only the risk in the section may be created. At this time, there is a possibility that there is another travel pattern with the minimum risk when viewed between stations, but by doing so, a travel pattern with a heuristically reduced risk can be created.

Each device and each unit described in each embodiment may be provided as an on-board device or a part of the functions thereof, or may be provided as a ground unit such as a command unit or a part of the functions. A similar effect can be obtained in any case as long as the function described in each embodiment is provided.

Reference Signs List

101  ATO device
102  train control and management system
103  propulsion control device
104  master controller
105  travel pattern creation device
106  speed/position detection unit
107  control command calculation unit
108  speed generator
109  ground element
110  on-vehicle element
111  planning unit
112  tracking unit
113  speed deviation calculation unit
201  risk storage unit
202  inter-station travel time storage unit
203  travel pattern creation unit

**Claims**

1. A travel pattern creation device (105) for creating a travel pattern of a vehicle traveling on a track, comprising:

   a risk storage unit (201) configured to store a risk value of each section which a route between stations is divided into;
   an inter-station travel time storage unit (202) configured to store a reference inter-station travel time, which is a travel time between each station defined on a schedule for the vehicle; and
   a travel pattern creation unit (203) configured to output a travel pattern as a target travel pattern, wherein the target travel pattern satisfies a predetermined condition according to the reference inter-station travel time and is such that a risk impact calculated based on the risk value of each section is minimized.

2. The travel pattern creation device (105) according to claim 1,
   wherein the travel pattern creation unit (203) is configured to receive an updated risk value transmitted from a risk update unit (603).

3. The travel pattern creation device (105) according to claim 2,
   wherein the updated risk value is selected from a risk table, the updated risk value within the risk table being set in advance for a scenario altering the risk value.

4. The travel pattern creation device (105) according to claim 3
   wherein the scenario includes at least one of a natural environment condition and a passenger flow.

5. The travel pattern creation device (105) according to claim 1,
   wherein the travel pattern creation unit (203) is configured to receive an updated inter-station travel time transmitted from an inter-station travel time update unit (604).

6. The travel pattern creation device (105) according to any preceding claim,
   wherein the risk value is defined based on a risk of collision between the vehicle and obstacles.

7. The travel pattern creation device (105) according to claim 1,
   wherein the risk value is calculated from a first risk value defined according to a characteristic of the section and a second risk value defined according to a speed of the vehicle.

8. The travel pattern creation device (105) according to claim 1,
   wherein the risk value for each section is defined according to a presence or absence of at least one of a railroad crossing, platform, tunnel, bridge, overhead, underground, curve, slope, turnout, steep slope near track, high-rise building near track and structure on track.

9. The travel pattern creation device (105) according to claim 1, further comprising:

a first determination unit configured to determine whether a travel pattern satisfies the predetermined condition according to the reference inter-station travel time; and
a second determination unit configured to determine whether a travel pattern fitted within a preset risk tolerance value can be created in a case where the first determination unit determines that the travel pattern is not acceptable.

10. An automatic train operation device (101), comprising:

a speed detection unit (106) configured to detect a speed of a train;
a position detection unit (106) configured to detect a position of the train;
a planning unit (111) configured to plan a target speed of the train from a travel pattern which, with a risk value of each section which a route between stations is divided into and a reference inter-station travel time, which is a travel time between each station defined on a schedule for the train, satisfies a predetermined condition according to the reference inter-station travel time and is such that a risk impact calculated based on the risk value of each section, the speed, and the position, is minimized;
a speed deviation calculation unit (113) configured to calculate a speed deviation from the speed and the target speed; and
a tracking unit (112) configured to receive the speed deviation, calculate a propulsion force of the train and outputs a propulsion command including the propulsion force to a train control and management system (102) or a propulsion control device (103).

11. The automatic train operation device (101) according to claim 10,
wherein the risk value is defined based on a risk of collision between the train and obstacles.

12. A travel pattern creation method for creating a travel pattern of a vehicle traveling on a track, the method comprising the steps of:

creating a travel pattern that minimizes a risk impact calculated from a risk value of each section which a route between stations is divided into
determining whether the created travel pattern satisfies a predetermined condition according to a reference inter-station travel time, said reference inter-station travel time being a travel time between each station defined on a schedule for the vehicle; and
outputting the travel pattern determined to satisfy the predetermined condition as a target travel pattern.

13. The travel pattern creation method according to claim 12,
wherein the risk value is defined based on a risk of collision between the vehicle and obstacles.

**Patentansprüche**

1. Fahrtmustererstellungsvorrichtung (105) zum Erstellen eines Fahrtmusters eines Fahrzeugs, das auf einer Gleisstrecke fährt, umfassend:

eine Risikospeichereinheit (201), die ausgelegt ist, um einen Risikowert jedes Abschnitts zu speichern, in die eine Route zwischen Stationen unterteilt ist;
eine Speichereinheit (202) für die Fahrzeit zwischen Stationen, die ausgelegt ist, um eine Referenzfahrzeit zwischen Stationen zu speichern, die eine Fahrzeit zwischen jeder Station ist, die in einem Plan für das Fahrzeug definiert ist; und
eine Fahrtmustererstellungseinheit (203), die ausgelegt ist, um ein Fahrtmuster als ein Zielfahrtmuster auszugeben, wobei das Zielfahrtmuster eine vorbestimmte Bedingung gemäß der Referenzfahrzeit zwischen Stationen erfüllt und derart ausgelegt ist, dass eine Risikoauswirkung, die basierend auf dem Risikowert jedes Abschnitts berechnet wurde, minimiert wird.

2. Fahrtmustererstellungsvorrichtung (105) nach Anspruch 1, wobei die Fahrtmustererstellungseinheit (203) ausgelegt ist, um einen aktualisierten Risikowert zu empfangen, der von einer Risikoaktualisierungseinheit (603) übertragen wurde.

3. Fahrtmustererstellungsvorrichtung (105) nach Anspruch 2, wobei der aktualisierte Risikowert aus einer Risikotabelle ausgewählt ist, wobei der aktualisierte Risikowert innerhalb der Risikotabelle im Vorhinein für ein Szenario, in dem der Risikowert geändert wird, eingestellt ist.

4. Fahrtmustererstellungsvorrichtung (105) nach Anspruch 3, wobei das Szenario zumindest eines aus einer natürlichen Umgebungsbedingung und einem Passagierstrom umfasst.

5. Fahrtmustererstellungsvorrichtung (105) nach Anspruch 1, wobei die Fahrtmustererstellungseinheit (203) ausgelegt ist, um eine aktualisierte Fahrzeit zwischen Stationen zu empfangen, die von einer Aktualisierungseinheit (604) einer Fahrzeit zwischen Stationen übertragen wurde.

6. Fahrtmustererstellungsvorrichtung (105) nach einem der vorangegangenen Ansprüche, wobei der Risikowert basierend auf einem Kollisionsrisiko zwischen dem Fahrzeug und von Hindernissen definiert ist.

7. Fahrtmustererstellungsvorrichtung (105) nach Anspruch 1, wobei der Risikowert ausgehend von einem ersten Risikowert, der gemäß einem Merkmal des Abschnitts definiert ist, und einem zweiten Risikowert, der gemäß einer Geschwindigkeit des Fahrzeugs definiert ist, berechnet wird.

8. Fahrtmustererstellungsvorrichtung (105) nach Anspruch 1, wobei der Risikowert für jeden Abschnitt gemäß einem Vorhandensein oder Nicht-Vorhandensein von zumindest einem eines Bahnübergangs, eines Bahnsteigs, eines Tunnels, einer Brücke, einer Überführung, einer Unterführung, einer Kurve, eines Gefälles, einer Weiche, eines steilen Anstiegs nahe der Gleise, eines Hochhauses nahe der Gleise und einer Struktur auf den Gleisen definiert ist.

9. Fahrtmustererstellungsvorrichtung (105) nach Anspruch 1, die ferner Folgendes umfasst:

   eine erste Bestimmungseinheit, die ausgelegt ist, um zu bestimmen, ob ein Fahrtmuster die vorbestimmte Bedingung gemäß der Fahrzeit zwischen Stationen erfüllt; und
   eine zweite Bestimmungseinheit, die ausgelegt ist, um zu bestimmen, ob ein Fahrtmuster, das innerhalb eines voreingestellten Risikotoleranzwerts eingepasst ist, in einem Fall erstellt werden kann, in dem die erste Bestimmungseinheit bestimmt, dass das Fahrtmuster nicht akzeptabel ist.

10. Automatische Zugbetriebsvorrichtung (101), umfassend:

   eine Geschwindigkeitsdetektionseinheit (106), die ausgelegt ist, um eine Geschwindigkeit eines Zugs zu detektieren;
   eine Positionsdetektionseinheit (106), die ausgelegt ist, um eine Position des Zugs zu detektieren;
   eine Planungseinheit (111), die ausgelegt ist, um eine Zielgeschwindigkeit des Zugs aus einem Fahrtmuster zu planen, das, mit einem Risikowert jedes Abschnitts, in die eine Route zwischen Stationen unterteilt ist, und einer Referenzfahrzeit zwischen Stationen, die eine Fahrzeit zwischen jeder Station ist, die auf einem Plan für den Zug definiert ist, eine vorbestimmte Bedingung gemäß der Referenzfahrzeit zwischen Stationen erfüllt und derartig ist, dass eine Risikoauswirkung, die basierend auf dem Risikowert jedes Abschnitts, der Geschwindigkeit und der Position berechnet wird, minimiert wird;
   eine Geschwindigkeitsabweichungsberechnungseinheit (113), die ausgelegt ist, um eine Geschwindigkeitsabweichung von der Geschwindigkeit und der Zielgeschwindigkeit zu berechnen; und
   eine Nachverfolgungseinheit (112), die ausgelegt ist, um die Geschwindigkeitsabweichung zu empfangen, eine Antriebskraft des Zugs zu berechnen und einen Antriebsbefehl, einschließlich der Antriebskraft, an ein Zugsteuerungs- und - verwaltungssystem (102) oder eine Antriebssteuervorrichtung (103) auszugeben.

11. Automatische Zugbetriebsvorrichtung (101) nach Anspruch 10, wobei der Risikowert basierend auf einem Risiko einer Kollision zwischen dem Zug und von Hindernissen definiert wird.

12. Fahrtmustererstellungsverfahren zum Erstellen eines Fahrtmusters eines Fahrzeugs, das auf einem Gleis fährt, wobei das Verfahren folgende Schritte umfasst:

   Erstellen eines Fahrtmusters, das eine Risikoauswirkung minimiert, die ausgehend von einem Risikowert jedes Abschnitts berechnet wurde, in die eine Route zwischen Stationen unterteilt ist;
Bestimmen, ob das erstellte Fahrtmuster eine vorbestimmte Bedingung gemäß einer Referenzfahrzeit zwischen Stationen erfüllt, wobei die Referenzfahrzeit zwischen Stationen eine Fahrzeit zwischen jeder Station ist, die in einem Plan für das Fahrzeug definiert ist; und
Ausgeben des bestimmten Fahrtmusters, um die vorbestimmte Bedingung als ein Zielfahrtmuster zu erfüllen.

13. Fahrtmustererstellungsverfahren nach Anspruch 12, wobei der Risikowert basierend auf einem Risiko einer Kollision zwischen dem Fahrzeug und von Hindernissen definiert ist.

**Revendications**

1. Dispositif de création de schéma de déplacement (105) pour créer un schéma de déplacement d'un véhicule se déplaçant sur une voie, comprenant :

   une unité de stockage de risque (201) configurée pour stocker une valeur de risque de chaque section en lesquelles un itinéraire entre des stations est divisé ;
   une unité de stockage de temps de déplacement entre stations (202) configurée pour stocker un temps de déplacement entre stations de référence, qui est un temps de déplacement entre chaque station défini sur un horaire pour le véhicule ; et
   une unité de création de schéma de déplacement (203) configurée pour délivrer en sortie un schéma de déplacement en tant que schéma de déplacement cible, dans lequel le schéma de déplacement cible satisfait une condition prédéterminée selon le temps de déplacement entre stations de référence et est tel qu'un impact de risque calculé sur la base de la valeur de risque de chaque section est minimisé.

2. Dispositif de création de schéma de déplacement (105) selon la revendication 1,
   dans lequel l'unité de création de schéma de déplacement (203) est configurée pour recevoir une valeur de risque mise à jour transmise à partir d'une unité de mise à jour de risque (603) .

3. Dispositif de création de schéma de déplacement (105) selon la revendication 2,
   dans lequel la valeur de risque mise à jour est sélectionnée à partir d'un tableau de risque, la valeur de risque mise à jour dans le tableau de risque étant définie à l'avance pour un scénario modifiant la valeur de risque.

4. Dispositif de création de schéma de déplacement (105) selon la revendication 3,
   dans lequel le scénario inclut au moins un parmi une condition d'environnement naturel et un flux de passagers.

5. Dispositif de création de schéma de déplacement (105) selon la revendication 1,
   dans lequel l'unité de création de schéma de déplacement (203) est configurée pour recevoir un temps de déplacement entre stations mis à jour transmis depuis une unité de mise à jour de temps de déplacement entre stations (604).

6. Dispositif de création de schéma de déplacement (105) selon l'une quelconque des revendications précédentes,
   dans lequel la valeur de risque est définie sur la base d'un risque de collision entre le véhicule et des obstacles.

7. Dispositif de création de schéma de déplacement (105) selon la revendication 1,
   dans lequel la valeur de risque est calculée à partir d'une première valeur de risque définie en fonction d'une caractéristique de la section et d'une seconde valeur de risque définie en fonction d'une vitesse du véhicule.

8. Dispositif de création de schéma de déplacement (105) selon la revendication 1,
   dans lequel la valeur de risque pour chaque section est définie en fonction de la présence ou de l'absence d'au moins un parmi un passage à niveau, une plate-forme, un tunnel, un pont, un plafond, un souterrain, une courbe, une pente, un branchement, une pente raide près de la voie, un bâtiment de grande hauteur près de la voie et une structure sur la voie.

9. Dispositif de création de schéma de déplacement (105) selon la revendication 1, comprenant en outre :

   une première unité de détermination configurée pour déterminer si un modèle de déplacement satisfait ou non à la condition prédéterminée selon le temps de déplacement entre stations de référence ; et

une seconde unité de détermination configurée pour déterminer si un schéma de déplacement ajusté dans une valeur de tolérance de risque prédéfinie peut être créé dans un cas où la première unité de détermination détermine que le schéma de déplacement n'est pas acceptable.

10. Dispositif d'exploitation de train automatique (101), comprenant :

une unité de détection de vitesse (106) configurée pour détecter une vitesse d'un train ;
une unité de détection de position (106) configurée pour détecter une position du train ;
une unité de planification (111) configurée pour planifier une vitesse cible du train à partir d'un schéma de déplacement qui, avec une valeur de risque de chaque section en lesquelles un itinéraire entre stations est divisé, et un temps de trajet entre stations de référence, qui est un temps de trajet entre chaque station défini sur un horaire pour le train, satisfait une condition prédéterminée selon le temps de trajet entre stations de référence et est telle qu'un impact de risque calculé sur la base de la valeur de risque de chaque section, de la vitesse et de la position, est minimisé ;
une unité de calcul d'écart de vitesse (113) configurée pour calculer un écart de vitesse par rapport à la vitesse et à la vitesse cible ; et
une unité de suivi (112) configurée pour recevoir l'écart de vitesse, calculer une force de propulsion du train et délivrer en sortie une commande de propulsion comprenant la force de propulsion vers un système de commande et de gestion de train (102) ou un dispositif de commande de propulsion (103).

11. Dispositif d'exploitation automatique de train (101) selon la revendication 10,
dans lequel la valeur de risque est définie sur la base d'un risque de collision entre le train et les obstacles.

12. Procédé de création de schéma de déplacement pour créer un schéma de déplacement d'un véhicule se déplaçant sur une voie, le procédé comprenant les étapes consistant à :

créer un schéma de déplacement qui minimise un impact de risque calculé à partir d'une valeur de risque de chaque section en lesquelles un itinéraire entre les stations est divisé ;
déterminer si le schéma de déplacement créé satisfait une condition prédéterminée selon un temps de déplacement entre stations de référence, ledit temps de déplacement entre stations de référence étant un temps de déplacement entre chaque station défini sur un horaire pour le véhicule ; et
délivrer en sortie le schéma de déplacement déterminé pour satisfaire la condition prédéterminée en tant que modèle de déplacement cible.

13. Procédé de création de schéma de déplacement selon la revendication 12,
dans lequel la valeur de risque est définie sur la base d'un risque de collision entre le véhicule et des obstacles.

# FIG. 1

# FIG. 2

201

RISK
STORAGE UNIT

202

INTER-STATION
TRAVEL TIME
STORAGE UNIT

203

TRAVEL PATTERN CREATION UNIT

# FIG. 3

301

303

| START MILEAGE [m] | END MILEAGE [m] | BASIC RISK | SPEED [km/h] | SPEED-DEPENDENT RISK |
|---|---|---|---|---|
| 1500 | 1600 | 400 | 10 | 10 |
| 1500 | 1600 | 400 | 20 | 40 |
| 1500 | 1600 | 400 | 30 | 90 |
| : | : | : | : | : |

RAILROAD CROSSING

302

304

| START MILEAGE [m] | END MILEAGE [m] | BASIC RISK | SPEED [km/h] | SPEED-DEPENDENT RISK |
|---|---|---|---|---|
| 900 | 1000 | 10 | 10 | 10 |
| 900 | 1000 | 10 | 20 | 40 |
| 900 | 1000 | 10 | 30 | 90 |
| : | : | : | : | : |

# FIG. 4

Start

ACQUIRE TABLE — 401

ACQUIRE REFERENCE INTER-STATION TRAVEL TIME — 402

CREATE FASTEST TRAVEL PATTERN — 403

CREATE TRAVEL PATTERN CANDIDATE — 404

IS IT WITHIN TRAVEL TIME BETWEEN REFERENCE STATIONS? — 405    No

Yes

TRANSMIT TRAVEL PATTERN — 406

End

# FIG. 5

CORRECTED TARGET TRAVEL PATTERN

SPEED

RAILROAD CROSSING

501

POSITION

SECTION 1 · · ·   SECTION n · · ·

TRAVEL PATTERN CANDIDATE
(SECTION 1)

501
502

$\Delta t_1 = 10$
$\Delta r_1 = 10$
$S_1 = 1$

· · ·

TRAVEL PATTERN CANDIDATE
(SECTION n)

501

503
RAILROAD CROSSING

$\Delta t_n = 20$
$\Delta r_a = 40$
$S_n = 2$

· · ·

CORRECTED TRAVEL PATTERN

504

RAILROAD CROSSING

18

# FIG. 6

# FIG. 7

```
                    ┌─────────┐
                    │  Start  │
                    └─────────┘
                         │
          ┌──────────────────────────┐
          │   ACQUIRE LATEST RISK     │  ～ 701
          │  EVALUATION INFORMATION   │
          └──────────────────────────┘
                         │
          ┌──────────────────────────┐
          │      ACQUIRE LATEST       │  ～ 702
          │  INTER-STATION TRAVEL TIME│
          └──────────────────────────┘
                         │
          ┌──────────────────────────┐
          │      CREATE FASTEST       │  ～ 703
          │      TRAVEL PATTERN       │
          └──────────────────────────┘
                         │
                         ├──◄─────────────────────────────────────┐
                         │                                         │
          ┌──────────────────────────┐                            │
          │      CREATE TRAVEL        │  ～ 704                    │
          │    PATTERN CANDIDATE      │                            │
          └──────────────────────────┘                            │
                         │                                         │
               ╱─────────────────╲  ～ 705                        │
              ╱   IS IT WITHIN     ╲                              │
             ╱ REFERENCE INTER-STATION ╲────────────┐             │
             ╲   TRAVEL TIME?      ╱   No            │             │
              ╲─────────────────╱                   │             │
                      │ Yes                          │             │
                      │                    ╱──────────────────╲    │
          ┌──────────────────────┐  ～706 ╱   RECREATION IN     ╲ No│
          │ TRANSMIT TRAVEL PATTERN│      ╲ RISK TOLERANCE VALUE ╱──┘
          └──────────────────────┘        ╲   IS IMPOSSIBLE     ╱
                      │                     ╲──────────────────╱  ～707
                      │                              │ Yes
                      │                   ┌──────────────────────────┐
                      │                   │ TRANSMIT CORRECTION SIGNAL│ ～708
                      │                   └──────────────────────────┘
                      │                              │
                      ├──◄──────────────────────────┘
                      │
                 ┌─────────┐
                 │   End   │
                 └─────────┘
```

**EP 3 747 686 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016005294 A